# EUROPEAN PATENT APPLICATION

(11) **EP 4 446 005 A1**
(43) Date of publication of application: **16.10.2024**
(21) Application number: 22914244.3
(22) Date of filing: 13.12.2022
(51) Int. Cl.: B01J 23/882

(54) **COBALT-MOLYBDENUM CO-IMPREGNATION LIQUID, PREPARATION METHOD THEREFOR, AND APPLICATION THEREOF**

(30) Priority: 31.12.2021 CN 202111662157
(71) Applicant: PetroChina Company Limited, Dongcheng District Beijing 100007 (CN)
(72) Inventor: CHEN, Changjie, Chengdu, Sichuan 610213 (CN); LIU, Zhihua, Chengdu, Sichuan 610213 (CN); WEN, Chongrong, Chengdu, Sichuan 610213 (CN); XU, Juan, Chengdu, Sichuan 610213 (CN); ZHU, Hongyang, Chengdu, Sichuan 610213 (CN)
(74) Representative: Ström & Gulliksson AB
(86) International application number: PCT/CN2022/138780
(87) International publication number: WO 2023/124989

(57) **Abstract**

The present invention relates to the technical field of sulfur tail gas recovery and treatment, and discloses a cobalt-molybdenum co-impregnation liquid, a preparation method therefor, and an application thereof. The preparation method comprises: (1) performing a first mixing operation on a molybdenum salt, urea and water to obtain a first solution; (2) carrying out a second mixing operation on the first solution and a carbon removing agent to obtain a second solution; and (3) performing a third mixing operation on the second solution and a cobalt salt to obtain a cobalt-molybdenum co-impregnation liquid. The precursors of active cobalt and molybdenum components can effectively coexist in the impregnation liquid, and attain the concentration required by the preparation of a catalyst. The active components are effectively loaded on a carrier through one-off impregnation, thereby significantly shortening the production process of the catalyst, and saving the production cost. The preparation process does not need toxic and harmful ammonia water. The prepared co-impregnation liquid is used for the preparation of a cobalt-molybdenum hydrogenation catalyst, which can obtain higher organic sulfur hydrolysis activity compared with a catalyst prepared from a traditional method.

## Description

### CROSS-REFERENCE TO RELATED APPLICATIONS

The present application claims the benefit of Chinese patent application No. "202111662157.7", filed on December 31, 2021, the content of which is specifically and entirely incorporated herein by reference.

### FIELD

The present disclosure relates to the technical field of sulfur tail gas recovery and treatment, in particular to a cobalt-molybdenum co-impregnation liquid, a preparation method therefor, and a use thereof.

### BACKGROUND

The sulfur sources in the hydrogen sulfide-containing acid gases are typically recovered by the Claus process during the procedure of processing the natural gas, refinery gas, or coal chemical gas, 90-97% of the sulfur compounds in the acid gas are converted to sulfur and recycled, the remaining unrecovered sulfur compounds are subjected to the tail gas treatment and incineration and discharging. The key technology in the tail gas treatment is the hydrogenation-reduction process. The process converts the unconverted sulfur dioxide, carbon disulfide, organosulfur, and sulfur in the sulfur recovery tail gas by hydrogenation or hydrolysis under the action of a hydrogenation catalyst to hydrogen sulfide, which is subjected to the subsequent treatment, wherein the hydrogenation catalyst is critical for the process.

The hydrogenation catalyst currently used is generally composed of a carrier of active alumina and active components of cobalt oxide and molybdenum oxide. The traditional preparation process of the catalyst comprises the following steps: drying the carrier - formulation of ammonium molybdate solution - impregnation of ammonium molybdate - the first operations of drying and calcination - formulation of cobalt nitrate solution - impregnation of cobalt nitrate - the second operations of drying and calcination. When the alkaline ammonium molybdate and the acidic cobalt nitrate co-exist in a solution, a cobalt molybdate precipitate will be generated, which blocks the pores and channels of the carrier during impregnation, such that the content of active cobalt and molybdenum components on the catalyst cannot meet the requirement. Therefore, two impregnation modes are generally adopted in order to ensure the loading effect of the active components. The traditional preparation process has the key defects as follows: 1) the carrier undergoes two impregnations and two operations of drying and calcination, resulting in reduced catalyst product strength and high abrasion ratio, in addition, long preparation process requires many production equipment and an increased cost; and 2) since ammonium molybdate is substantially insoluble in water, the concentrated ammonia water (with a concentration of 30-50wt.%) needs to be added as a co-solvent during the formulation process of an ammonium molybdate solution, resulting in the leakage of a large amount of toxic ammonia gas during the subsequent impregnation, drying and calcination process, the ammonia gas may contaminate the production environment and jeopardize the health of operators.

The generation of the above defects has a close association with the impregnation liquid and impregnation process utilized during the preparation process of a catalyst. Therefore, from the perspective of the impregnation liquid optimization, it has important and practical significance to provide an impregnation liquid that meets the cobalt-molybdenum concentration required by the catalyst preparation, is capable of shortening the impregnation process, and effectively reducing contaminant release during the solution formulation and catalyst preparation process.

### SUMMARY

The present disclosure aims to provide a cobalt-molybdenum co-impregnation liquid, a preparation method therefor, and a use thereof, in order to overcome the defects in the prior art that the precursors of active cobalt and molybdenum components cannot coexist efficiently in an impregnation liquid in the preparation process of the cobalt-molybdenum hydrogenation catalyst, the long catalyst production process and high cost caused by the requirement of multi-step impregnation, and the contamination hazard problems resulting from an use of concentrated ammonia water in the formulation process of impregnation liquid.

In order to achieve the above object, the first aspect of the present dosclosure provides a method for preparing a cobalt-molybdenum co-impregnation liquid comprising the following steps:
(1) performing a first mixing operation on a molybdenum salt, urea and water to obtain a first solution;
(2) carrying out a second mixing operation on the first solution and a carbon removing agent to obtain a second solution;
(3) performing a third mixing operation on the second solution and a cobalt salt to obtain a cobalt-molybdenum co-impregnation liquid.

The second aspect of the present disclosure provides a cobalt-molybdenum co-impregnation liquid prepared with the method of the aforementioned first aspect.

The third aspect of the present disclosure provides a use of the cobalt-molybdenum co-impregnation liquid of the aforementioned second aspect in the field of preparing a Claus tail gas hydrogenation catalyst.

Due to the technical scheme, the present disclosure can achieve the favorable effects as follows:
(1) The urea and molybdenum salt are utilized for obtaining a complex compound, so that the solubility of molybdenum salt in water is enhanced, and formation of insolubles from the molybdenum salt and subsequently added cobalt salt can be avoided, the precursors of active cobalt and molybdenum components can effectively coexist in the impregnation liquid, and the concentration required by the preparation of a catalyst is attained;
(2) The small amount of byproduct carbon dioxide from the urea decomposition can be removed by precipitation with a carbon removing agent, avoiding its attachment onto the catalyst carrier resulting in partial carbonization of the calcined carrier, such that the activity of the catalyst is unaffected;
(3) The cobalt-molybdenum co-impregnation liquid can load the precursors of active cobalt and molybdenum components on the catalyst carrier through one-off impregnation, the production process of the cobalt-molybdenum hydrogenation catalyst can be shortened from two impregnation and two operations of drying and calcination to one-off impregnation and one-off operation of drying and calcination, the production process is significantly shortened, the production cost is saved.
(4) The preparation process does not require the use of ammonia water, thereby solving the problem of contamination hazard caused by the leakage of a large amount of ammonia gas during the subsequent process of impregnation, drying and calcination;
(5) The co-impregnation liquid of the present disclosure is used for preparing a cobalt-molybdenum hydrogenation catalyst, the prepared catalyst has the hydrogenation activity comparable to that of a catalyst prepared with the conventional method, and has higher organic sulfur hydrolysis activity, such that the SO₂ hydrogenation conversion rate is higher than 99.8%, and the organic sulfur hydrolysis rate is higher than 91%.

### BRIEF DESCRIPTION OF THE DRAWINGS

The accompanying drawings, which are provided to facilitate the further comprehension of the invention and constitute a part of the specification, serve to explain the invention together with the following description of the preferred embodiment, and do not impose limitations on the inventions. In the accompanying drawings:

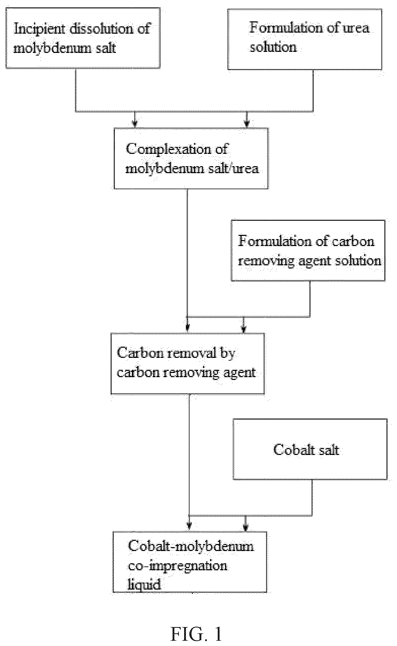

FIG. 1 illustrates a flow chart of the preparation method for a cobalt-molybdenum co-impregnation liquid according to an embodiment of the present disclosure.

### DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The specific embodiments of the present disclosure will be described in detail below. It should be understood that the specific embodiments described herein merely serve to illustrate and explain the invention, instead of imposing restrictions thereon.

The first aspect of the present disclosure provides a method for preparing a cobalt-molybdenum co-impregnation liquid comprising the following steps:
(1) performing a first mixing operation on a molybdenum salt, urea and water to obtain a first solution;
(2) carrying out a second mixing operation on the first solution and a carbon removing agent to obtain a second solution;
(3) performing a third mixing operation on the second solution and a cobalt salt to obtain a cobalt-molybdenum co-impregnation liquid.

In the research course of the present disclosure, the inventors have found that the raw material are mixed according to the above-mentioned multi-step mode, the precursors of active components of molybdenum salt and cobalt salt in the existing cobalt-molybdenum hydrogenation catalyst are used, urea is used for participating in the dissolution process of molybdenum salt, a carbon removing agent is further added, the dissolution of the cobalt salt is subsequently performed, such that the precursors of active cobalt and molybdenum components can effectively coexist in the same solution system under the conditions that the concentration required by the preparation of a catalyst is attained, a stable cobalt-molybdenum co-impregnation liquid is formed. The impregnation liquid prepared with the steps and sequence contained in the aforementioned method during the preparation process of the cobalt-molybdenum hydrogenation catalyst can load the precursors of active cobalt and molybdenum components on the catalyst carrier by one-off impregnation, thereby substantially shortening the production process, and avoiding the pollution problem of ammonia gas in the conventional process, the prepared catalyst is used for treating Claus tail gas with high SO₂ hydrogenation conversion rate and an advantage of higher organic sulfur hydrolysis rate.

According to the present disclosure, in the raw materials used for preparing the cobalt-molybdenum co-impregnation liquid, the weight ratio of the molybdenum salt: urea: carbon removing agent: cobalt salt is preferably (20-35): (0.2-5): (0.2-1): (10-20), in order to obtain a stable co-impregnation solution, and allow the co-impregnation liquid to satisfy the ratio of active cobalt and molybdenum components required for preparing of the hydrogenation catalyst. Further preferably, the weight ratio of the molybdenum salt: urea: carbon removing agent: cobalt salt is (25-30): (0.4-2.25): (0.375-0.65): (15-18).

According to the present disclosure, it is preferable that the molybdenum salt may be ammonium molybdate; the cobalt salt may be at least one selected from the group consisting of cobalt nitrate, cobalt oxalate and cobalt carbonate, further preferably cobalt nitrate.

According to the present disclosure, urea and the molybdenum salt can form a complex compound with improved solubility during the dissolution process of the molybdenum salt in water, thereby enhancing the dissolving capacity of the molybdenum salt in water, and the formed complex compound can effectively prevent the reaction between the subsequently added cobalt salt and the molybdenum salt to form insoluble substance, such that the molybdenum salt and the cobalt salt can effectively coexist in the same solution system at the required concentration, the occurrence of blocking of pores and channels in the carrier by precipitates during the impregnation process of the carrier is significantly reduced, the improved loading effect can be produced.

According to the present disclosure, during the formation of the complex compound with urea and molybdenum salt, urea will be decomposed such that small amounts of carbon dioxide are present in the obtained first solution, carbon dioxide can be attached to a carrier during the impregnation of the carrier, it may cause local carbonization of the carrier during the subsequent calcination process. By adding a carbon removing agent to the first solution, which on the one hand can remove carbon dioxide from the first solution in the form of a precipitate, and on the other hand, the carbon removing agent is capable of adjusting the pH of the solution and further facilitates the solidification and precipitation of carbon dioxide, the synergy of the above two aspects can remove carbon from the solution, thereby avoiding the introduction of carbon in the carrier, and ensuring the activity of the prepared catalyst product. Preferably, the carbon removing agent is selected from calcium acetate and/or calcium oxalate, further preferably calcium acetate.

In the present disclosure, the impurity ions (acetate ions and/or oxalate ions) introduced by the carbon removing agent and present in the cobalt-molybdenum co-impregnation liquid, which is attached to a carrier and subsequently oxidatively decomposed during the subsequent calcination process, do not affect the activity of the prepared catalyst product.

According to the present disclosure, the urea and carbon removing agent each independently adopts the form of a solid or an aqueous solution, preferably an aqueous solution, which is advantageous for obtaining a more stable co-impregnation solution. When taking the form of an aqueous solution, it is preferable that the aqueous urea solution has a concentration within the range of 8-15wt%, which leads to better complexation effect and expedites dissolution of the molybdenum salt, and the aqueous carbon removing agent solution has a concentration within the range of 2.5-3.5wt%, which produces a better carbon removal effect.

According to the present disclosure, in the first mixing operation process in step (1), the feeding mode and the sequence of the molybdenum salt, urea and water are not particularly limited, as long as complete dissolution of the molybdenum salt is achieved by mixing, and the stable first solution is obtained. Preferably, the first mixing operation is performed within the temperature range of 50-80°C, and further preferably within the range of 65-75°C.

In a preferred embodiment of the present disclosure, it is preferable in step (1) to initially add 30-40% of the total weight of the molybdenum salt to water for carrying out an incipient dissolution, then add the urea, and finally add all the remaining amount of the molybdenum salt, in this way, it is possible to obtain a better complexation effect, and further facilitate dissolution of the molybdenum salt, and obtain a stable first solution.

According to the present disclosure, the conditions for the second mixing operation in step (2) are defined in wide ranges, as long as the first solution is mixed with the carbon removing agent to obtain a stable second solution, it is preferable to adopt the mode of adding the carbon removing agent to the first solution and mixing the materials.

According to the present disclosure, the pH of the second solution in step (2) is preferably within the range of 8.5-10, further preferably within the range of 9.3-9.8.

According to the present disclosure, the conditions of the third mixing operation in step (3) are defined in wide ranges, as along as the second solution is mixed with the cobalt salt to obtain a stable cobalt-molybdenum co-impregnation liquid, it is preferable to adopt the mode of adding the cobalt salt to the second solution and mixing the materials.

According to the present disclosure, the concentration of precursors of active cobalt and molybdenum components in the produced cobalt-molybdenum co-impregnation liquid can meet the requirement of the impregnation effect by controlling an appropriate used amount of water. In the case that both the urea and the carbon removing agent are fed in a solid form, the water in the cobalt-molybdenum co-impregnation liquid comes all from the initial feed water in step (1); in the case that the urea and/or the carbon removing agent are fed in an aqueous solution, the water in the aqueous urea solution and/or the aqueous carbon removing agent solution is used as feed water together with the initial feed water in step (1). Preferably, the water in the raw material is used in an amount such that the prepared cobalt-molybdenum co-impregnation liquid has the molybdenum concentration calculated in terms of MoO₃ within the range of 160-290g/L, preferably within the range of 200-250g/L, the cobalt concentration calculated in terms of CoO within the range of 25-50g/L, preferably within the range of 35-45g/L, and the ammonia concentration calculated in terms of NH₃ within the range of 2-8g/L, preferably within the range of 4-6g/L, based on the total amount of the cobalt-molybdenum co-impregnation liquid.

In the present disclosure, it is preferable that the first mixing operation, the second mixing operation and the third mixing operation may be each independently performed under the stirring conditions, the stirring can increase a dissolution rate of the raw materials and shorten the production period of the co-impregnation liquid.

A flow chart of the preparation method of a cobalt-molybdenum co-impregnation liquid according to an embodiment of the present disclosure is shown in FIG. 1.

The second aspect of the present disclosure provides a cobalt-molybdenum co-impregnation liquid prepared with the method of the aforementioned first aspect.

According to the present disclosure, the molybdenum concentration calculated in terms of MoO₃ is within the range of 160-290g/L, preferably within the range of 200-250g/L, the cobalt concentration calculated in terms of CoO is within the range of 25-50g/L, preferably within the range of 35-45g/L, and the ammonia concentration calculated in terms of NH₃ is within the range of 2-8g/L, preferably within the range of 4-6g/L, based on the total amount of the cobalt-molybdenum co-impregnation liquid.

By using the cobalt-molybdenum co-impregnation liquid provided by the present disclosure can load the precursors of active cobalt and molybdenum components on the catalyst carrier by one-off impregnation, the prepared hydrogenation catalyst has a lower residual ammonia content, and can effectively reduce influence of the alkaline substances on the acid catalytic center of the catalyst during the preparation process. The produced hydrogenation catalyst can be used for treating Claus tail gas, such that the SO₂ hydrogenation conversion rate is higher than 99.8%, and the organic sulfur hydrolysis rate is higher than 91%.

The third aspect of the present disclosure provides a use of the cobalt-molybdenum co-impregnation liquid according to the aforementioned second aspect in the field of preparing a Claus tail gas hydrogenation catalyst.

The present disclosure will be described in detail below with reference to examples. In the following examples and comparative examples, the materials are ordinary and commercially available product unless otherwise specified.

### Example 1

(1) 36% of the total weight of ammonium molybdate was added to water for carrying out an incipient dissolution, the stirring was then started and an aqueous urea solution at 74°C (with a concentration of 13.5wt%) was slowly added, all the remaining ammonium molybdate was subsequently added, the stirring was continued until the ammonium molybdate was completely dissolved, a first solution was obtained;
(2) an aqueous solution of calcium acetate (with a concentration of 3.1wt%) was added to the first solution in step (1), and the stirring was continued to obtain a second solution with a pH of 9.5;
(3) cobalt nitrate was added to the second solution of step (2), and stirred continuously until the cobalt nitrate was completely dissolved, a clear and transparent cobalt-molybdenum co-impregnation liquid (denoted as S1) was prepared;

In the above steps, the weight ratio of ammonium molybdate: urea: calcium acetate: cobalt nitrate: water is 28.1: 2.15: 0.57: 17.3: 51.88 (in the weight ratio, the weights of urea and calcium acetate were calculated based on the solid solute, and the weight of water was calculated based on the water used for the incipient dissolution of ammonium molybdate in step (1));
The cobalt-molybdenum co-impregnation liquid S1 had the molybdenum concentration of 223g/L calculated in terms of MoO₃, the cobalt concentration of 43.3g/L calculated in terms of CoO, and the ammonia concentration of 5.4g/L calculated in terms of NH₃.

### Example 2

(1) 33% of the total weight of ammonium molybdate was added to water for carrying out an incipient dissolution, the stirring was then started and an aqueous urea solution at 71°C (with a concentration of 14wt%) was slowly added, all the remaining ammonium molybdate was subsequently added, the stirring was continued until the ammonium molybdate was completely dissolved, a first solution was obtained;
(2) an aqueous solution of calcium acetate (with a concentration of 3.2wt%) was added to the first solution in step (1), and the stirring was continued to obtain a second solution with a pH of 9.4;
(3) cobalt nitrate was added to the second solution of step (2), and stirred continuously until the cobalt nitrate was completely dissolved, a clear and transparent cobalt-molybdenum co-impregnation liquid (denoted as S2) was prepared;

In the above steps, the weight ratio of ammonium molybdate: urea: calcium acetate: cobalt nitrate: water is 29.2: 2.04: 0.58: 16.8: 51.38 (in the weight ratio, the weights of urea and calcium acetate were calculated based on the solid solute, and the weight of water was calculated based on the water used for the incipient dissolution of ammonium molybdate in step (1));
The cobalt-molybdenum co-impregnation liquid S2 had the molybdenum concentration of 237g/L calculated in terms of MoO₃, the cobalt concentration of 41.4g/L calculated in terms of CoO, and the ammonia concentration of 4.9g/L calculated in terms of NH₃.

### Example 3

(1) 35% of the total weight of ammonium molybdate was added to water for carrying out an incipient dissolution, the stirring was then started and an aqueous urea solution at 68°C (with a concentration of 14.5wt%) was slowly added, all the remaining ammonium molybdate was subsequently added, the stirring was continued until the ammonium molybdate was completely dissolved, a first solution was obtained;
(2) an aqueous solution of calcium acetate (with a concentration of 2.8wt%) was added to the first solution in step (1), and the stirring was continued to obtain a second solution with a pH of 9.6;
(3) cobalt nitrate was added to the second solution of step (2), and stirred continuously until the cobalt nitrate was completely dissolved, a clear and transparent cobalt-molybdenum co-impregnation liquid (denoted as S3) was prepared;

In the above steps, the weight ratio of ammonium molybdate: urea: calcium acetate: cobalt nitrate: water is 27.7: 1.85: 0.51: 16.1: 53.84 (in the weight ratio, the weights of urea and calcium acetate were calculated based on the solid solute, and the weight of water was calculated based on the water used for the incipient dissolution of ammonium molybdate in step (1));
The cobalt-molybdenum co-impregnation liquid S3 had the molybdenum concentration of 229g/L calculated in terms of MoO₃, the cobalt concentration of 40.8g/L calculated in terms of CoO, and the ammonia concentration of 4.8g/L calculated in terms of NH₃.

### Example 4

(1) 31% of the total weight of ammonium molybdate was added to water for carrying out an incipient dissolution, the stirring was then started and an aqueous urea solution at 78°C (with a concentration of 12.5wt%) was slowly added, all the remaining ammonium molybdate was subsequently added, the stirring was continued until the ammonium molybdate was completely dissolved, a first solution was obtained;
(2) an aqueous solution of calcium oxalate (with a concentration of 2.6wt%) was added to the first solution in step (1), and the stirring was continued to obtain a second solution with a pH of 9.0;
(3) cobalt nitrate was added to the second solution of step (2), and stirred continuously until the cobalt nitrate was completely dissolved, a clear and transparent cobalt-molybdenum co-impregnation liquid (denoted as S4) was prepared;

In the above steps, the weight ratio of ammonium molybdate: urea: calcium oxalate: cobalt nitrate: water is 21.8: 4.5: 0.35: 12.9: 60.45 (in the weight ratio, the weights of urea and calcium oxalate were calculated based on the solid solute, and the weight of water was calculated based on the water used for the incipient dissolution of ammonium molybdate in step (1));
The cobalt-molybdenum co-impregnation liquid S4 had the molybdenum concentration of 182g/L calculated in terms of MoO₃, the cobalt concentration of 37.3g/L calculated in terms of CoO, and the ammonia concentration of 7.7g/L calculated in terms of NH₃.

### Example 5

(1) 39% of the total weight of ammonium molybdate was added to water for carrying out an incipient dissolution, the stirring was then started and an aqueous urea solution at 66°C (with a concentration of 9.3wt%) was slowly added, all the remaining ammonium molybdate was subsequently added, the stirring was continued until the ammonium molybdate was completely dissolved, a first solution was obtained;
(2) an aqueous solution of calcium oxalate (with a concentration of 2.9wt%) was added to the first solution in step (1), and the stirring was continued to obtain a second solution with a pH of 9.1;
(3) cobalt carbonate was added to the second solution of step (2), and stirred continuously until the cobalt carbonate was completely dissolved, a clear and transparent cobalt-molybdenum co-impregnation liquid (denoted as S5) was prepared;

In the above steps, the weight ratio of ammonium molybdate: urea: calcium oxalate: cobalt carbonate: water is 31.3: 3.7: 0.22: 10.8: 53.98 (in the weight ratio, the weights of urea and calcium oxalate were calculated based on the solid solute, and the weight of water was calculated based on the water used for the incipient dissolution of ammonium molybdate in step (1));
The cobalt-molybdenum co-impregnation liquid S5 had the molybdenum concentration of 274g/L calculated in terms of MoO₃, the cobalt concentration of 27.2g/L calculated in terms of CoO, and the ammonia concentration of 7.3g/L calculated in terms of NH₃.

### Example 6

(1) 32% of the total weight of ammonium molybdate was added to water for carrying out an incipient dissolution, the stirring was then started and an aqueous urea solution at 69°C (with a concentration of 9.8wt%) was slowly added, all the remaining ammonium molybdate was subsequently added, the stirring was continued until the ammonium molybdate was completely dissolved, a first solution was obtained;
(2) the solid calcium oxalate was added to the first solution in step (1), and the stirring was continued to obtain a second solution with a pH of 9.9;
(3) cobalt oxalate was added to the second solution of step (2), and stirred continuously until the cobalt oxalate was completely dissolved, a clear and transparent cobalt-molybdenum co-impregnation liquid (denoted as S6) was prepared;

In the above steps, the weight ratio of ammonium molybdate: urea: calcium oxalate: cobalt oxalate: water was 33.6: 4.2: 0.23: 11.6: 50.37 (in the weight ratio, the weight of urea was calculated based on the solid solute, and the weight of water was calculated based on the water used for the incipient dissolution of ammonium molybdate in step (1));
The cobalt-molybdenum co-impregnation liquid S6 had the molybdenum concentration of 284g/L calculated in terms of MoO₃, the cobalt concentration of 28.3g/L calculated in terms of CoO, and the ammonia concentration of 7.5g/L calculated in terms of NH₃.

### Example 7

(1) ammonium molybdate and solid urea were added to water, heated to 80°C and stirred continuously until the ammonium molybdate and urea were completely dissolved, a first solution was obtained;
(2) the solid calcium oxalate was added to the first solution in step (1), and the stirring was continued to obtain a second solution with a pH of 9.7;
(3) cobalt oxalate was added to the second solution of step (2), and stirred continuously until the cobalt oxalate was completely dissolved, a clear and transparent cobalt-molybdenum co-impregnation liquid (denoted as S7) was prepared;

In the above steps, the weight ratio of ammonium molybdate: urea: calcium oxalate: cobalt oxalate: water was 30.4: 3.8: 0.26: 14.3: 51.24;
The cobalt-molybdenum co-impregnation liquid S7 had the molybdenum concentration of 269g/L calculated in terms of MoO₃, the cobalt concentration of 31.1g/L calculated in terms of CoO, and the ammonia concentration of 7.4g/L calculated in terms of NH₃.

### Comparative Example 1

The cobalt-molybdenum co-impregnation liquid was prepared according to the method in Example 1, except that the weight ratio of ammonium molybdate: urea: calcium acetate: cobalt nitrate: water was 28.1: 0.15: 0.57: 17.3: 53.88 (in the weight ratio, the weights of urea and calcium acetate were calculated based on the solid solute, and the weight of water was calculated based on the water used for the incipient dissolution of ammonium molybdate in step (1)). The other steps and operating parameters were the same as those in Example 1. A cobalt-molybdenum co-impregnation liquid (denoted as D1) was prepared;
a certain amount of cobalt molybdate precipitate was present in the cobalt-molybdenum co-impregnation liquid Dl, which had the molybdenum concentration of 86g/L calculated in terms of MoO₃, the cobalt concentration of 8.3g/L calculated in terms of CoO, and the ammonia concentration of 0.8g/L calculated in terms of NH₃.

### Comparative Example 2

The cobalt-molybdenum co-impregnation liquid was prepared according to the method in Example 1, except that step (2) was omitted, cobalt nitrate was added to the first solution of step (1) to carry out the step (3), wherein the weight ratio of ammonium molybdate: urea: cobalt nitrate: water was 28.1: 2.15: 17.3: 52.45 (in the weight ratio, the weight of urea was calculated based on the solid solute, and the weight of water was calculated based on the water used for the incipient dissolution of ammonium molybdate in step (1)). The other steps and operating parameters were the same as those in Example 1. A cobalt-molybdenum co-impregnation liquid (denoted as D2) was prepared;
the cobalt-molybdenum co-impregnation liquid D2 had the molybdenum concentration of 224g/L calculated in terms of MoO₃, the cobalt concentration of 40.6g/L calculated in terms of CoO, and the ammonia concentration of 11.7g/L calculated in terms of NH₃.

### Comparative Example 3

(1) 36% of the total weight of ammonium molybdate was added to distilled water for carrying out an incipient dissolution, the stirring was then started and an aqueous citric acid solution at 74°C (with a concentration of 13.5wt%) was slowly added, all the remaining ammonium molybdate was subsequently added, the stirring was continued until the ammonium molybdate was completely dissolved, a first solution was obtained;
(2) an aqueous phosphoric acid solution (with a concentration of 3.1wt%) was added to the first solution in step (1), and the stirring was continued to obtain a second solution with a pH of 8.4;
(3) cobalt nitrate was added to the second solution of step (2), and stirred continuously until the cobalt nitrate was completely dissolved, a cobalt-molybdenum co-impregnation liquid (denoted as D3) was prepared;

In the above steps, the weight ratio of ammonium molybdate: citric acid: phosphoric acid: cobalt nitrate: water is 28.1: 2.15: 0.57: 17.3: 51.88 (in the weight ratio, the weights of citric acid and phosphoric acid were calculated based on the solute, and the weight of water was calculated based on the water used for the incipient dissolution of ammonium molybdate in step (1));
a certain amount of cobalt molybdate precipitate was present in the cobalt-molybdenum co-impregnation liquid D3, which had the molybdenum concentration of 147g/L calculated in terms of MoO₃, the cobalt concentration of 18.3g/L calculated in terms of CoO, and the ammonia concentration of 0g/L calculated in terms of NH₃ (i.e., it did not contain ammonia).

### Comparative Example 4

280g of ammonium molybdate, 240g of ammonia water (with a concentration of 18% by weight in terms of NH₃) and 440g of water were blended, the materials were then stirred and heated to 80°C, a ammonium molybdate impregnation liquid (with the molybdenum concentration of 229g/L calculated in terms of MoO₃, and the ammonia concentration of 41.7g/L calculated in terms of NH₃) was obtained; 160g of cobalt nitrate was mixed with 835g of water, the stirring was then started to obtain a cobalt nitrate impregnation liquid (the cobalt concentration of 39g/L calculated in terms of CoO). The ammonium molybdate impregnation liquid and cobalt nitrate impregnation liquid were used together as an impregnation liquid (denoted as D4).

### Test Example

The impregnation liquids (S1-S7, D1-D3) obtained from Examples 1-7 and Comparative Examples 1-3 were respectively used for preparing the hydrogenation catalysts according to the following process:
350g of active alumina with a water absorption rate of 0.56g/g was weighted and impregnated in 4,800g of impregnation liquids at room temperature for 2h, the impregnation products were taken out and filtered, subjected to drying at 110°C for 2h and calcination at 520°C for 3h to prepare the hydrogenation catalysts (denoted as CS1-CS7, CD1-CD3 respectively), the contents of active components (molybdenum concentration calculated in terms of MoO₃, cobalt concentration calculated in terms of CoO) and residual ammonia (calculated in terms of NH₃) in the catalysts were shown in Table 1.

The hydrogenation catalyst was prepared using the impregnation liquid D4 obtained in Comparative Example 4 according to the following process:
350g of active alumina with a water absorption rate of 0.56g/g was weighted and impregnated in 4,800g of ammonium molybdate impregnation liquid at room temperature for 2h, the impregnation product was taken out and filtered, subjected to a first drying at 110°C for 2h and a first calcination at 520°C for 3h, the cooled first calcination product was soaked in 4,800g of cobalt nitrate impregnation liquid at room temperature for 2h, the impregnation product was taken out and filtered, subjected to a second drying at 110°C for 2h and a second calcination at 520°C for 3h, the hydrogenation catalyst (denoted as CD4) was prepared, the contents of active components (molybdenum concentration calculated in terms of MoO₃, cobalt concentration calculated in terms of CoO) and residual ammonia (calculated in terms of NH₃) in the catalyst were shown in Table 1.

The prepared hydrogenation catalysts CS1-CS7, CD1-CD4 were used separately for Claus tail gas hydrogenation desulfurization treatment to evaluate catalytic activity, the test procedures and conditions were as follows:
the hydrogenation catalysts were crushed to a particle size of 1.0-1.5mm; 25g of the crushed catalyst was weighted and loaded in a fixed bed reactor tube having an inner diameter of 20mm and heated; the temperature of middle portion of the catalyst bed was controlled to be 250°C, a Claus tail gas (containing the following ingredients in vol%: H₂S 3.5-4%, SO₂ 20.5-0.6%, COS (organosulfur) 0.03-0.05%, H₂ 2-3%, water vapor 20-30%, the balance was N₂) was fed into the reactor at a flow rate of 1,000 mL/min, after stabilization for 2h, the gas compositions at inlet and outlet of the reactor were analyzed. SO₂ hydrogenation conversion rate and organosulfur hydrolysis rate were calculated based on the concentrations of SO₂ and COS in the gases at inlet and outlet of the reactor, respectively. The results were shown in Table 1.

**Table 1**

| Catalysts | Molybdenum content /wt% | Cobalt content /wt% | Residual ammonia content /wt% | SO₂ hydrogenation conversion rate /% | Organosulfur hydrolysis rate /% |
|---|---|---|---|---|---|
| CS1 | 11.8 | 2.0 | 0.22 | 99.84 | 93.8 |
| CS2 | 12.5 | 2.4 | 0.27 | 99.85 | 94.3 |
| CS3 | 12.6 | 2.3 | 0.24 | 99.83 | 93.5 |
| CS4 | 11.1 | 1.8 | 0.31 | 99.84 | 91.7 |
| CS5 | 13.9 | 1.7 | 0.30 | 99.85 | 91.4 |
| CS6 | 14.1 | 1.8 | 0.31 | 99.85 | 91.7 |
| CS7 | 13.8 | 1.9 | 0.29 | 99.83 | 91.5 |
| CD1 | 3.4 | 0.42 | 0.04 | 95.31 | 27.9 |
| CD2 | 9.7 | 2.1 | 0.61 | 97.60 | 88.4 |
| CD3 | 6.7 | 1.2 | 0 | 96.60 | 73.9 |
| CD4 | 11.9 | 2.0 | 0.83 | 99.84 | 88.7 |

As illustrated by Table 1, the hydrogenation catalysts CS1-CS7 are prepared with the impregnation liquids obtained by using the method provided by the present disclosure, and the active molybdenum and cobalt components in the produced catalysts CS1-CS7 are comparable to those of the catalysts (e.g., CD4) prepared with the traditional method, and the content of residual ammonia is significantly lower. In the catalytic activity test under the equivalent conditions, the catalysts CS1-CS7 exhibit the SO₂ hydrogenation conversion rate greater than 99.8%, which is comparable to that of the catalyst CD4; however, the catalysts CS1-CS7 demonstrate an organosulfur hydrolysis rate greater than 91%, thereby exhibiting a significant advantage in organic sulfur hydrolysis activity over the catalyst CD4.

The above content describes in detail the preferred embodiments of the invention, but the invention is not limited thereto. A variety of simple modifications can be made in regard to the technical solutions of the invention within the scope of the technical concept of the invention, including a combination of individual technical features in any other suitable manner, such simple modifications and combinations thereof shall also be regarded as the content disclosed by the invention, each of them falls into the protection scope of the invention.

## Claims

1. A method for preparing a cobalt-molybdenum co-impregnation liquid comprising the following steps:
(1) performing a first mixing operation on a molybdenum salt, urea and water to obtain a first solution;
(2) carrying out a second mixing operation on the first solution and a carbon removing agent to obtain a second solution;
(3) performing a third mixing operation on the second solution and a cobalt salt to obtain a cobalt-molybdenum co-impregnation liquid.

2. The method of claim 1, wherein the weight ratio of the molybdenum salt: urea: carbon removing agent: cobalt salt is (20-35): (0.2-5): (0.2-1): (10-20), preferably (25-30): (0.4-2.25): (0.375-0.65): (15-18).

3. The method of claim 1 or 2, wherein the molybdenum salt is ammonium molybdate;
preferably, the cobalt salt is at least one selected from the group consisting of cobalt nitrate, cobalt oxalate and cobalt carbonate, further preferably cobalt nitrate.

4. The method of any one of claims 1-3, wherein the carbon removing agent is selected from calcium acetate and/or calcium oxalate, preferably calcium acetate.

5. The method of any one of claims 1-4, wherein the urea and carbon removing agent each independently adopts the form of a solid or an aqueous solution, preferably an aqueous solution;
preferably, the aqueous urea solution has a concentration within the range of 8-15wt%, and the aqueous carbon removing agent solution has a concentration within the range of 2.5-3.5wt%.

6. The method of any one of claims 1-5, wherein the temperature of the first mixing operation in step (1) is within the range of 50-80°C, preferably within the range of 65-75°C.

7. The method of any one of claims 1-6, wherein the pH of the second solution in step (2) is within the range of 8.5-10, preferably within the range of 9.3-9.8.

8. The method of any one of claims 1-7, wherein the water in the raw material is used in an amount such that the prepared cobalt-molybdenum co-impregnation liquid has the molybdenum concentration calculated in terms of MoO₃ within the range of 160-290g/L, preferably within the range of 200-250g/L, the cobalt concentration calculated in terms of CoO within the range of 25-50g/L, preferably within the range of 35-45g/L, and the ammonia concentration calculated in terms of NH₃ within the range of 2-8g/L, preferably within the range of 4-6g/L, based on the total amount of the cobalt-molybdenum co-impregnation liquid.

9. A cobalt-molybdenum co-impregnation liquid prepared with the method of any one of claims 1-8.

10. A use of the cobalt-molybdenum co-impregnation liquid of claim 9 in the field of preparing a Claus tail gas hydrogenation catalyst.
